Europäisches Patentamt

European Patent Office

Office européen des brevets

(11) Veröffentlichungsnummer: **0 212 112 B1**

# EUROPÄISCHE PATENTSCHRIFT

(45) Veröffentlichungstag der Patentschrift: **12.06.91**

(51) Int. Cl.⁵: **C02F 1/52**, C02F 11/00

(21) Anmeldenummer: **86107896.2**

(22) Anmeldetag: **10.06.86**

(54) **Reaktionsbehälter für zu entwässernde Schlämme oder zu reinigendes Abwasser.**

(30) Priorität: **10.08.85 DE 3528783**

(43) Veröffentlichungstag der Anmeldung:
**04.03.87 Patentblatt 87/10**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**BE-A- 668 629**
**US-A- 3 389 892**

(73) Patentinhaber: **Schneider, Ludwig, Dipl.-Ing.**
**Gutenbergstrasse 32 - 34**
**W-7132 Illingen(DE)**

(72) Erfinder: **Schneider, Ludwig, Dipl.-Ing.**
**Gutenbergstrasse 32 - 34**
**W-7132 Illingen(DE)**

(74) Vertreter: **Frank, Gerhard, Dipl.-Phys.**
**Patentanwälte Dr. F. Mayer & G. Frank Westliche 24**
**W-7530 Pforzheim(DE)**

EP 0 212 112 B1

**Beschreibung**

Die Erfindung betrifft einen Reaktionsbehälter für zu entwässernde Schlämme oder zu reinigendes Abwasser und Flockungsmittel, mit einer Einlauf- und einer Auslauföffnung und einem dazwischen ausgebildeten Reaktionsraum zur Flockung, sowie mit einer Rühreinrichtung zur Durchmischung der Flockungsmittel mit dem zu reinigenden Gut.

Ein derartiger Reaktionsbehälter ist aus der DE-C-31 47 679 bekannt.

Die erfindungsgemäße Lösung ist dadurch gekennzeichnet, daß der Reaktionsraum in einen unterhalb der Einlauföffnung sich mit nach unten zunehmendem Querschnitt erstreckenden Mischraum und einen sich beidseitig des Mischraums erstreckenden Sammelraum für die Flocken aufgeteilt ist, und daß die Rühreinrichtung mindestens eine Platte ist, die im Mischraum pendelnd aufgehängt ist und die absinkenden Flocken beidseitig in den Sammelraum fördert.

Die allgemeine Problematik bei derartigen Reaktionsbehältern besteht darin, daß einerseits im Anfangsstadium eine gründliche Durchmischung des Schlammgutes bzw. der Abwässer mit den zugegebenen Flockungsmitteln erreicht werden muß, mit zunehmender Flockengröße aber wegen deren Empfindlichkeit gegen äußere Einwirkungen diese möglichst schonend behandelt werden müssen, um eine Zerstörung der gebildeten Flocken zu verhindern. Es ist also erforderlich, eine abgestufte Einwirkung der Rühreinrichtung auf die sich bildenden Flocke zu erreichen. Durch die erfindungsgemäße Lösung wird das Flockungsmittel im Eingabebereich, also im oberen Teil des Mischraums, relativ kräftig durch die als Rühreinrichtung hin und her schwenkende Platte mit dem zu reinigenden Gut vermischt, durch den sich erweiternden Querschnitt des Mischraums wird diese Einwirkung durch die Rühreinrichtung aber immer schwächer, so daß die sich während des Absinkens bildenden Flocken einer zunehmend schonenderen Behandlung unterzogen werden, bis sie im unteren Bereich des Reaktionsraums von der Rühreinrichtung sanft in den beidseitig angeordneten Sammelraum befördert werden, wo sie in einer geeigneten Höhe abgezogen und abtransportiert werden können.

In einer vorteilhaften Ausgestaltung der erfindungsgemäßen Lösung ist vorgesehen, die Aufteilung des Reaktionsraums durch mehrere Leitbleche vorzusehen, die so im Reaktionsbehälter aufgehängt bzw. angeordnet sind, daß Strömungsverhältnisse sich ergeben, die die oben beschriebene Einwirkung auf die Flocken bewirken, bis diese schließlich in einem durch die Leitbleche gebildeten Eindickungsraum von einer Schlammförderleitung abgezogen werden können.

In einer Ausgestaltung dieser Anordnung ist vorgesehen, daß zwischen dem Eindickungsraum und dem Mischraum eine Leitungsverbindung zur Rückführung von Flocken vorgesehen ist.

Durch diese Leitungsverbindung, die eine Art "Rückkopplung" bewirkt, wird dem einfließenden, zu reinigenden Gut ein bestimmter Teil an bereits ausgebildeten Flocken zugesetzt, so daß hierdurch einerseits die Flockenbildung im Eingangsbereich angeregt wird und andererseits eine Ersparnis von Flockungsmitteln erzielt werden kann. Letztlich bewirkt diese Rückführung auch eine Stabilisierung des dynamischen Verhaltens der Flüssigkeit im Reaktionsraum, insbesondere eine Stabilisierung der am oberen Ende des Sammelraums sich bildenden Schicht von ausgereiften Flocken.

Weiterhin ist in vorteilhafter Weise vorgesehen, daß der Reaktionsraum kubisch oder quaderförmig ausgebildet ist.

Dies eröffnet die Möglichkeit, den Reaktionsbehälter so zu dimensionieren, daß er innerhalb eines üblichen Industrie-Containers angeordnet werden kann, wodurch sich einfache Transportmöglichkeiten für den erfindungsgemäßen Reaktionsbehälter ergeben, der durch Hintereinanderschaltung mehrerer gleicher Reaktionsbehälter bausatz- oder modulartig aufgebaut werden kann und dadurch insbesondere auch als transportable Klärvorrichtung überall dort eingesetzt werden kann, wo die Klärung von Abwassern oder Schlämmen für eine bestimmte Zeitspanne erforderlich ist.

Zur Erzielung der oben angesprochenen gründlichen Durchmischung der Abwässer mit dem Flockungsmittel einerseits und der schonenden Behandlung und Weitertransport der sich bildenden Flocken andererseits ist es besonders vorteilhaft, wenn die als Platte ausgebildete Rühreinrichtung ein Lochblech ist, wobei der Lochdurchmesser nach unten hin zunimmt und wobei Anzahl und Lochdurchmesser nach bestimmten physikalischen Gesetzmäßigkeiten definiert sind. Die Vorgabe von Lochdurchmesser und Anzahl der Löcher kann insbesondere durch den Fachmann so erfolgen, daß übermäßige Turbulenzen, d.h. abreißende Strömungsverhältnisse im Eingangsbereich des Mischraums mit den nachteiligen Folgen für die Flockenbildung vermieden werden können, da infolge des zunehmenden Lochdurchmessers zum unteren Ende des Mischraums hin eine kontinuierlich abnehmende Beaufschlagung des zu reinigenden Gutes erfolgt.

In Weiterbildung dieser Maßnahme ist vorgesehen, daß die Platte im Übergangsbereich zwischen Mischraum und Sammelraum vollflächig ausgebildet ist.

In diesem Bereich dient die Platte nicht mehr zur Durchmischung, sondern zur Erzeugung einer geeigneten Strömung vom Zentrum des Reaktionsraums zu dem beidseitig angeordneten Mischraum, die vollflächige Platte am unteren Ende der Rühreinrichtung dient also vorwiegend als "Transportmittel".

Weitere vorteilhafte Ausgestaltungen der erfindungsgemäßen Lösung sind weiteren Unteransprüchen zu entnehmen.

Ein Ausführungsbeispiel des erfindungsgemäßen Reaktionsbehälters wird nun an Zeichnungen noch erläutert, es zeigen:

Figur 1:  Eine perspektivische Gesamtdarstellung des Reaktionsbehälters mit angeschlossenen weiteren Klärstufen in Containerform,

Figur 2:  einen Querschnitt durch den Reaktionsbehälter, und

Figur 3:  eine schematische Darstellung der als Lochblech ausgebildeten Rühreinrichtung mit den zur Berechnung von Lochabstand und Lochdurchmesser erforderlichen Parametern.

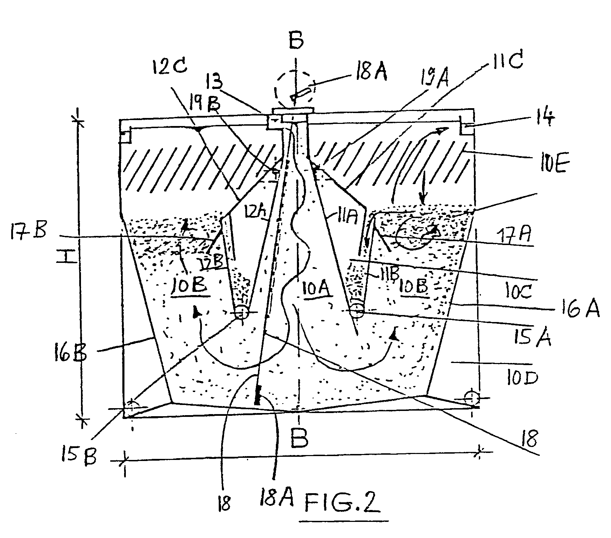

Der Reaktionsbehälter besteht aus einem quaderförmigen Gehäuse, in dessen Innenraum sich der Reaktionsraum 10 befindet. Durch verschiedenartige Leitbleche, deren Funktion weiter unten im einzelnen noch erläutert wird, ist der Reaktionsraum 10 in verschiedene Funktionsbereiche unterteilt, die einen bestimmten Strömungsweg für das zu reinigende Gut definieren. Der Reaktionsraum ist bezüglich der Längs-Mittelachse B-B (Figur 2) im wesentlichen symmetrisch aufgebaut. Im oberen zentralen Bereich ist entlang der Längssymmetrie-Ebene ein Abgaberohr für das zu reinigende Abwasser zur Zuführung desselben in den Reaktionsraum 10 angeordnet. Das zu reinigende Gut gelangt durch Längsschlitze in diesem Abgaberohr in den Eingangsbereich des beidseitig der Symmetrieachse sich erstreckenden Mischraums 10A.

Zur Unterteilung des Reaktionsraums sind in dessen mittlerem Bereich Leitbleche 11 und 12 vorgesehen, die ein Volumen mit etwa dreieckigem Querschnitt umschließen. Der innere Schenkel 11A,12A dieser Leitbleche 11,12 bildet mit der Symmetrieebene einen nach unten zeigenden Öffnungswinkel von etwa 20°, das zwischen diesen beiden inneren Schenkeln 11A,12A eingeschlossene Flüssigkeitsvolumen bildet den Mischraum 10A.

Die Leitbleche 11,12 weisen außerdem äußere Schenkel 11B,12B auf, die an das untere Ende der inneren Schenkel 11A,12A anschließen und sich mit einer Neigung gegenüber der Symmetrieachse nach oben bis etwa zum oberen Drittel des Reaktionsraums 10 erstrecken. Diesen gegenüberliegend sind weitere Leitbleche 16A, 16B vorgesehen, durch die der Reaktionsraum in seinem unteren Teil einen etwa trapezförmigen Querschnitt erhält. Das Volumen zwischen den äußeren Schenkeln 11B,12B und diesen Leitblechen 16A,16B bildet den Sammelraum 10B des Reaktionsraums 10, der im unteren Drittel des Reaktionsraums 10 mit dem Mischraum 10A in Verbindung steht.

Der von dem inneren Schenkel 11A und dem äußeren Schenkel 11B (bzw. 12A und 12B) gebildete Raum bildet den Eindickungsraum 10C, in dem sich die ausgereiften Flocken ansammeln. Dieser Eindickungsraum ist an seinem oberen Ende durch ein Abdeckblech 11C bzw. 12C bis auf einen seitlich angeordneten Eintrittsschlitz für die Flocken abgedeckt. Am oberen Ende des Eindickungsraums 10C (zwischen dem oberen Ende des inneren Schenkels 11A bzw. 12A und dem oberen Ende des Abdeckblechs 11C bzw. 12C) ist eine Abzugsleitung 19A bzw. 19B vorgesehen, deren Funktion weiter unten erläutert wird.

Zwischen den unteren Enden des inneren Schenkels 11A bzw. 12A und des äußeren Schenkels 11B bzw. 12B ist eine Schlammförderleitung 15A bzw. 15B vorgesehen, über die die ausgereiften Flocken abgezogen werden können.

Am oberen Ende des äußeren Schenkels 11B,12B ist ein Umlenkblech 17A,17B angebracht, das sich schräg nach unten erstreckt und das zur Verbesserung der Strömungsverhältnisse im Flockensammelbereich dient.

Im oberen Drittel des Reaktionsraums 10 sind Lamellenabscheider 10E angeordnet, an den oberen Längsseiten des Reaktionsraums 10 befindet sich eine Überlaufrinne 14 zum Abtransport des im Reaktionsraum gereinigten Wassers. Diese Überlaufrinne 14 kann sich außerhalb des Reaktionsraums 10 so fortsetzen, daß das hier gereinigte Wasser nachgeschalteten weiteren Klärstufen zugeführt wird, wie beispielsweise einer Filtereinheit 20 (Figur 1), die in konventioneller Technik beispielsweise als Sandfilter aufgebaut sein kann.

In der Symmetrieebene des Reaktionsraums 10 ist als Rühreinrichtung ein Lochblech 18 pendelnd aufgehängt, das über einen schematisch dargestellten Exzenterantrieb 18A derart bewegt werden kann, daß es den sich zwischen den inneren Schenkeln 11A,12A sich erstreckenden Mischraum 10A beaufschlagt, d.h., eine Durchmischung des dort befindlichen Flüssigkeitsvolumens bewirkt. Im Bereich des Mischraums 10A weist das Lochblech 18 mehrere Reihen von Löchern auf, wobei der Durchmesser der Löcher nach unten hin zunimmt.

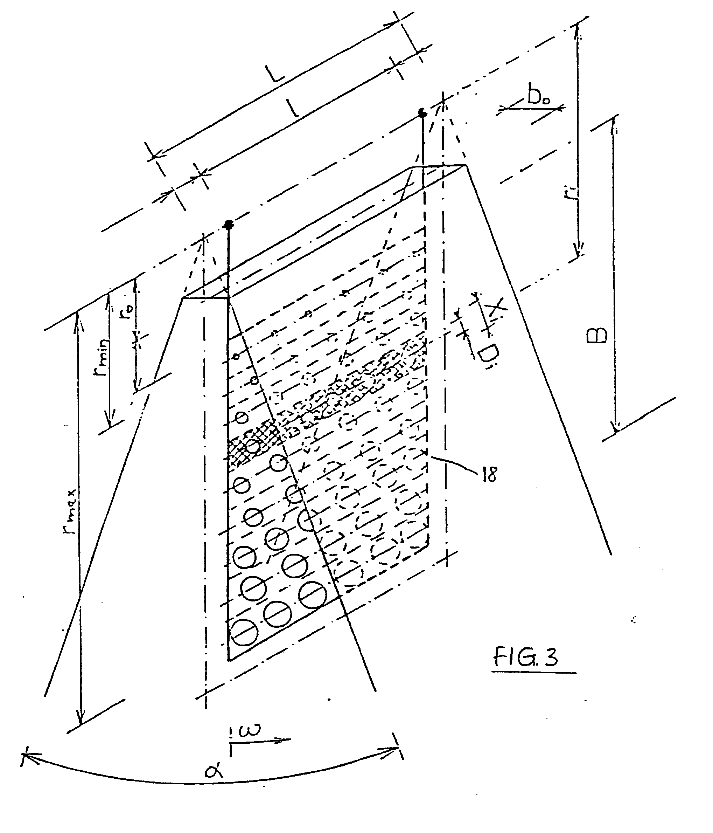

Unter Berücksichtigung der in Figur 3 angegebenen Parametern läßt sich die Anzahl und der Durchmesser dieser Löcher in der Lochplatte 18 so berechnen, daß diejenigen physikalischen Bedingungen eingehalten werden, die zur Durchmischung einerseits und zur schonenden Flockenbehandlung andererseits erforderlich sind. Die Anzahl z von Löchern mit dem Lochdurchmesser $D_i$ einer im Abstand $r_i$ von der Pendelachse des Lochblechs 18 liegenden Lochreihe berechnet sich dabei wie folgt:

$$D_i^2 \cdot z = \frac{4 x_i \cdot l}{\pi} - \frac{G_i^* \cdot L \cdot \frac{s}{g} \cdot T^3 \left( r_i^2 \cdot \tan \frac{\alpha}{2} - \frac{1}{2} b_0 r_0 \right)}{\pi^2 \cdot f \cdot r_i^3}$$

mit $X_i$ = Plattenbreite

$l$ = Plattenlänge

$L$ = Länge des Reaktionsbehälters

$s$ = kinematische Viskosität

$T$ = Schwingungsdauer

$\alpha$ = Öffnungswinkel des Mischraums 10A

$b_0$ = Eingangsbreite "   "

$r_0$ = Eingangsradius "   "

$f$ = Widerstandskoeffizient der Platte

$G_i^*$ = Geschwindigkeitsgradient $= \left( p/\mu V \right)^{1/2}$

mit $p$ = Leistung des Antriebsmotors.

Den unteren Abschluß der Rühreinrichtung bildet eine Platte 18A, durch die der Flüssigkeit der nötige Impuls vermittelt wird, damit eine Strömung aus dem Mischraum 10A zum Sammelraum 10B erzeugt wird.

Die Anlage arbeitet wie folgt:

Das zu reinigende Abwasser gelangt vom Abgaberohr 13 in den Mischraum 10A, wo es von dem hin- und herpendelnden Lochblech 18 erfaßt und mit den gleichfalls zugeführten Flockungsmitteln vermischt wird. Durch das Eigengewicht der sich bildenden Flocken einerseits und durch den Flüssigkeitabzug in der Überlaufrinne 14 und der Abzugsleitung 19A,19B andererseits sinken die wachsenden Flocken im Mischraum 10A ab und gelangen in Pfeilrichtung in den linken oder rechten Teil des Sammelraums 10B, wo sie nach oben aufsteigen und sich verdichten. Im Bereich des Umlenkblechs 17A,17B bildet sich insoweit ein stationärer Zustand aus, als dort eine Flockenwolke sich bildet, von der infolge des von der Abzugsleitung 19A,19B ausgeübten Soges die Oberflächenschicht durch den zwischen äußerem Schenkel 11B und Abdeckblech 11C verbleibenden Spalt in den Eindickungsraum 10C gelangt und dort von der Schlammförderleitung 15A bzw. 15B nach außen transportiert wird. Das derart teilgegereinigte Abwasser durchläuft auf seinem Weg zur Überlaufrinne 14 noch die Lamellenabscheider 10E, wo sich gegebenenfalls erneut Flocken bilden, die von oben auf die Flockenschicht im Bereich des Umlenkbleches 17A,17B zurückfallen. Durch diese Umlenkbleche wird erzielt, daß im Bereich der Flockenschicht eine Zirkulationsströmung sich aufbaut, durch die diejenigen Flocken, die nicht in den Eindickungsraum 10C gelangen von unten wieder der Flockenschicht zugeführt werden.

In dieser Flockenschicht kommt es zu einer Kompression dadurch, daß von oben eine Sedimentation geflockter Suspension erfolgt und von unten neue Flocken zugeführt werden. Dabei dient diese Flockenschicht gleichzeitig als Filtrationsschicht, je höher die Konzentration in der Flockenschicht ist, umso größer wird die Tendenz zur Flockung und neue von unten eintretende Flocken werden beim Durchgang durch diese Schicht absorbiert, bis sie in den Eindickungsraum 10C abgesaugt werden.

Im Bereich des Sammelraums befinden sich also von unten nach oben im wesentlichen drei verschiedene Zonen:

In der unteren Hälfte die Schmutzwasserzone mit den darin nach oben aufsteigenden Flocken, im

4

mittleren Bereich die Zone erhöhter Flockendichte (im Bereich der Umlenkbleche und des Überlaufs in den Eindickungsraum 10C) und im oberen Bereich bildet sich eine klare Wasserzone, in der eventuell durch die Flockenwolke durchgelangte Flocken vom Lamellenabscheider 10E aufgefangen und wieder der zweiten Zone zugeführt werden.

Diese Zustände können dadurch noch weiter stabilisiert werden, indem aus dem Eindickungsraum 10C mittels einer nicht dargestellten Leitung ein Teil des eingedickten Schlammes abgeführt und mit dem zugeführten Abwasser vermischt wird, so daß diese Flocken wieder in den Eingangsbereich des Mischraumes 10A gelangen.

Diese Flocken-Rezirkulation erhöht die Flockenkonzentration im Bereich der Flockenwolke (zweite Zone), damit ist die Anlage stabil gegen Schwankungen in der Abwasserzusammensetzung bei gleichzeitiger Verminderung des Verbrauchs an chemischen Flockungsmitteln.

Die erfindungsgemäße Anlage kann wie in Figur 1 schematisch dargestellt, noch durch zusätzliche Baukomponenten ergänzt werden, beispielsweise einen Schmutzwasserspeicher 30 und einen Maschinenraum 40, ein unterhalb der Leitbleche 16A,16B verbliebener Raum kann als Speicherraum für geklärtes Abwasser verwendet werden.

Die in Figur 1 dargestellte Anlage kann in Abmessungen eines international standardisierten Containers (ISO-Form) gebaut werden, so daß sie leicht transportabel ist. Die Kapazität des erfindungsgemäßen Reaktionsbehälters ist im wesentlichen durch dessen Länge bestimmt und kann auf die jeweiligen Erfordernisse dadurch einfach angepaßt werden.

## Ansprüche

1. Reaktionsbehälter für zu entwässernde Schlämme oder zu reinigendes Abwasser und Flockungsmittel, mit einer Einlauf- und einer Auslauföffnung und einem dazwischen ausgebildeten Reaktionsraum zur Flockung, sowie mit einer Rühreinrichtung zur Durchmischung der Flockungsmittel mit dem zu reinigenden Gut,
dadurch gekennzeichnet, daß der Reaktionsraum (10) in einen unterhalb der Einlauföffnung sich mit nach unten zunehmendem Querschnitt erstreckenden Mischraum (10A) und einen sich beidseitig des Mischraumes (10A) erstreckenden Sammelraum (10B) für die Flocken aufgeteilt ist, und daß die Rühreinrichtung mindestens eine Platte ist, die im Mischraum (10A) pendelnd aufgehängt ist und die absinkenden Flocken beidseitig in den Sammelraum (10B) befördert.

2. Reaktionsbehälter nach Anspruch 1, dadurch gekennzeichnet, daß zur Trennung zwischen Mischraum (10A) und Sammelraum (10B) je ein in den Reaktionsraum beidseitig zu dessen Mittelebene tauchendes Leitblech (11,12) mit V-förmigem Querschnitt angeordnet ist, dessen innere Schenkel (11A,12A) den Mischraum (10A) begrenzen und dessen niedrigere äußere Schenkel (11B,12B) zusammen mit den Behälterwandungen den Sammelraum (10B) begrenzen.

3. Reaktionsbehälter nach Anspruch 1 und 2, dadurch gekennzeichnet, daß die Einlauföffnung durch ein Abgaberohr (13) entlang eines inneren Schenkels (11A) an dessen oberem Ende gebildet ist, und daß die Ablauföffnung durch einen Überlauf (14) am oberen Ende des Reaktionsbehälters gebildet ist.

4. Reaktionsbehälter nach Anspruch 2 und 3, dadurch gekennzeichnet, daß der innere Teil der Leitbleche (11,12), der von deren beiden inneren Schenkeln (11A,12A) begrenzt wird, einen Eindickungsraum (10C) bilden, an dessen Basis eine Schlammförderleitung (15) zum Schlammabzug angeordnet ist.

5. Reaktionsbehälter nach Anspruch 1-4, dadurch gekennzeichnet, daß zwischen Eindickungsraum (10C) und Mischraum (10A) eine Leitungsverbindung zur Rückführung von Flocken vorgesehen ist.

6. Reaktionsbehälter nach Anspruch 1, dadurch gekennzeichnet, daß der Reaktionsraum (10) kubisch oder quaderförmig ausgebildet ist.

7. Reaktionsbehälter nach Anspruch 6, dadurch gekennzeichnet, daß in der unteren Hälfte des Reaktionsraumes (10) schräg stehende, zweite Leitbleche (16A,16B) angeordnet sind.

8. Reaktionsbehälter nach Anspruch 2, dadurch gekennzeichnet, daß im oberen Bereich des äußeren Schenkels (11B,12B) der Leitbleche (11,12) ein nach unter einwärts in den Sammelraum (10B) zeigendes Umlenkblech (17A,17B) angebracht ist.

9. Reaktionsbehälter nach Anspruch 1, dadurch gekennzeichnet, daß die Platte ein im Bereich zwischen den inneren Schenkeln (11A,12A) liegendes Lochblech (18) ist, und daß der Lochdurchmesser nach unten hin zunimmt.

10. Reaktionsbehälter nach Anspruch 9, dadurch gekennzeichnet, daß die Platte im Übergangsbereich zwischen Mischraum (10A) und Sammelraum (10B) vollflächig ausgebildet ist.

11. Reaktionsbehälter nach Anspruch 9, dadurch gekennzeichnet, daß der Lochdurchmesser auf den Neigungswinkel der inneren Schenkel (11A,11B) und das Volumen des Mischraumes (10A) abgestimmt ist.

12. Reaktionsbehälter nach Anspruch 6 und 7, dadurch gekennzeichnet, daß das Volumen zwischen den schräg stehenden zweiten Leitblechen (16A,16B) und den Außenwänden des Reaktionsbehälters als Speicherraum (10D) für Frischwasser dient.

13. Reaktionsbehälter nach Anspruch 11, dadurch gekennzeichnet, daß Anzahl (z) und Lochdurchmesser ($D_i$) einer im Abstand ($r_i$) von der Pendelachse der Platte liegenden Lochreihe gemäß folgender Beziehung gewählt sind:

$$D_i^2 \cdot z = \frac{4 x_i \cdot l}{\tilde{\pi}} - \frac{G_i^* \cdot L \cdot \frac{s}{\pi} \cdot T^3 \left( r_i^2 \cdot \tan\frac{\alpha}{2} - \frac{1}{2} b_0 r_0 \right)}{\tilde{\pi}^2 \cdot f \cdot r_i^3}$$

mit $X_i$ = Plattenbreite

$l$ = Plattenlänge

$L$ = Länge des Reaktionsbehälters

$s$ = kinematische Viskosität

$T$ = Schwingungsdauer

$\alpha$ = Öffnungswinkel des Mischraumes 10A

$b_0$ = Eingangsbreite " "

$r_0$ = Eingangsradius " "

$f$ = Widerstandskoeffizient der Platte

$G^*$ = Geschwindigkeitsgradient = $(p/\mu V)^{1/2}$

mit p = Leistung des Antriebsmotors

## Claims

1. Reaction container for sludges, which are to be dewatered, or waste water, which is to be purified, and flocculants, including an inlet aperture and an outlet aperture and a reaction chamber provided therebetween for the flocculation process, and also including a stirring arrangement for mixing the flocculants thoroughly with the material to be purified, characterised in that the reaction chamber (10) is divided into a mixing chamber (10A), which extends beneath the inlet aperture with a downwardly

6

increasing cross-section, and a collecting chamber (10B), which extends on each side of the mixing chamber (10A), for collecting the flocs, and in that the stirring arrangement is at least a plate which is mounted so as to oscillate in the mixing chamber (10A) and conveys the descending flocs into the collecting chamber (10B) on each side.

2. Reaction container according to claim 1, characterised in that, for the separation between the mixing chamber (10A) and the collecting chamber (10B), a baffle plate (11, 12) is provided, which extends into the reaction chamber on each side of its central plane and has a V-shaped cross-section, the inner walls (11A, 12A) of said baffle plates defining the mixing chamber (10A), and the lower outer walls (11B, 12B) of said baffle plates, together with the container walls, defining the collecting chamber (10B)

3. Reaction container according to claims 1 and 2, characterised in that the inlet aperture is formed by a delivery pipe (13) along an inner wall (11A) at its upper end, and the outlet aperture is formed by an overflow (14) at the upper end of the reaction container.

4. Reaction container according to claims 2 and 3, characterised in that the inner portions of the baffle plates (11, 12), which are defined by their two inner walls (11A, 12A), form a thickening chamber (10C), a sludge feedpipe (15) being disposed at the base of said thickening chamber for the removal of sludge.

5. Reaction container according to claims 1 to 4, characterised in that a pipe connection is provided between the thickening chamber (10C) and the mixing chamber (10A) for the return of flocs.

6. Reaction container according to claim 1, characterised in that the reaction chamber (10) has a cubic or parallelepiped configuration.

7. Reaction container according to claim 6, characterised in that inclinedly extending, second baffle plates (16A, 16B) are disposed in the lower half of the reaction chamber (10).

8. Reaction container according to claim 2, characterised in that a deflecting plate (17A, 17B), which extends downwardly and inwardly into the collecting chamber (10B), is provided in the upper region of the outer wall (11B, 12B) of each of the baffle plates (11, 12).

9. Reaction container according to claim 1, characterised in that the plate is a perforated plate (18), which is situated in the region between the inner walls (11A, 12A), and in that the diameter of the perforations increases as they extend downwardly.

10. Reaction container according to claim 9, characterised in that the plate is adapted to fill the area in the transitional region between the mixing chamber (10A) and the collecting chamber (10B).

11. Reaction container according to claim 9, characterised in that the diameter of the perforations is adapted to the angle of inclination of the inner walls (11A, 11B) and to the volume of the mixing chamber (10A).

12. Reaction container according to claims 6 and 7, characterised in that the volume between the inclinedly extending, second baffle plates (16A, 16B) and the outer walls of the reaction container serves as a storage chamber (10D) for fresh water.

13. Reaction container according to claim 11, characterised in that the number (z) and diameter (Di) of the perforations in a row of perforations, which is situated at a spacing ($r_i$) from the oscillatory axis of the plate, are selected in accordance with the following equation:

$$D_i^2 \cdot z = \frac{4 x_i \cdot L}{\tilde{n}} - \frac{G_i^* \cdot L \cdot \frac{s}{g} \cdot T^3 \left( r_i^2 \cdot \tan \frac{\alpha}{2} - \frac{1}{2} b_0 r_0 \right)}{\tilde{n}^2 \cdot f \cdot r_i^3}$$

7

```
wherein X₁  = plate width
        l   = plate length
        L   = length of the reaction container
        s   = kinematic viscosity
        T   = oscillation period
        α   = angle of aperture of the mixing chamber 10A
        bₒ  = inlet width          "    "    "      "     "
```

$r_o$ = inlet radius      "    "    "     "     "

$f$ = coefficient of resistance of the plate

$G^{*}$ = velocity gradient = $(p/uV)^{1/2}$

wherein $p$ = performance of the drive motor

## Revendications

1. Bassin pour le traitement de l'eau ou pour l'épaississement des boues et pour des floculants, avec un orifice d'admission et un orifice d'évacuation, entre lesquels est formé un compartiment réacteur pour la floculation, et avec un dispositif d'agitation pour le mélange des floculants avec le produit à traiter, caractérisé en ce que le compartiment réacteur (10) est subdivisé en un compartiment mélangeur (10A), sous-jacent à l'orifice d'admission et d'une section croissante vers le bas, et en un compartiment collecteur (10B) pour les flocons, situé de part et d'autre du compartiment mélangeur (10A), et en ce que le dispositif d'agitation se compose d'une plaque au moins, qui est suspendue et oscille dans le compartiment mélangeur (10A), et qui transporte les flocons descendants de part et d'autre, dans le compartiment collecteur (10B).

2. Bassin suivant la revendication 1, caractérisé en ce qu une chicane (11, 12) d'une section en Y, dont les branches internes (11A, 12A) délimitent le compartiment mélangeur (10A), et dont les branches externes plus basses (11B, 12B) délimitent le compartiment collecteur (10B), avec les parois du bassin, est respectivement immergée dans le compartiment réacteur, de part et d'autre du plan médian de ce dernier, en vue de séparer le compartiment mélangeur (10A) et le compartiment collecteur (10B).

3. Bassin suivant l'une des revendications 1 et 2, caractérisé en ce que l'orifice d'admission est formé par un tuyau de distribution (13) le long d'une branche interne (11A), sur l'extrémité supérieure de cette dernière, et en ce que l'orifice de décharge est formé par un trop-plein (14), sur l'extrémité supérieure du bassin.

4. Bassin suivant l'une des revendications 2 et 3, caractérisé en ce que la partie intérieure des chicanes (11, 12), limitée par les deux branches internes (11A, 12A), forme un compartiment épaississeur (10C), à la base duquel est disposée une conduite de transport (15) pour l'extraction des boues.

5. Bassin suivant les revendications 1 à 4, caractérisé en ce qu'un raccordement de conduite, pour la recirculation des flocons, est prévu entre le compartiment épaississeur (10C) et le compartiment mélangeur (10A).

6. Bassin suivant la revendication 1, caractérisé en ce que le compartiment réacteur (10) est de forme cubique ou parallélépipédique.

7. Bassin suivant la revendication 6, caractérisé par deux autres chicanes (16A, 16B), disposées à l'oblique dans la moitié inférieure du compartiment réacteur (10).

8. Bassin suivant la revendication 2, caractérisé en ce qu'un déflecteur (17A, 17B), orienté vers le bas et vers l'intérieur du compartiment collecteur (10B), est disposé dans la zone supérieure de la branche externe (11B, 12B) des chicanes (11, 12).

9. Bassin suivant la revendication 1, caractérisé en ce que la plaque est une tôle perforée (18), située dans la zone comprise entre les branches internes (11A, 12A), et en ce que le diamètre des trous augmente vers le bas.

10. Bassin suivant la revendication 9, caractérisé en ce que la plaque est réalisée sur toute la surface, dans la zone de transfert entre le compartiment mélangeur (10A) et le compartiment collecteur (10B).

11. Bassin suivant la revendication 9, caractérisé en ce que le diamètre des trous est adapté à l'angle d'inclinaison des branches internes (11A, 12A) et au volume du compartiment mélangeur (10A).

12. Bassin suivant l'une des revendications 6 et 7, caractérisé en ce que le volume, compris entre les secondes chicanes obliques (16A, 16B) et les parois externes du bassin, sert de compartiment de stockage (10D) pour l'eau fraîche.

13. Bassin suivant la revendication 11, caractérisé en ce que le nombre (z) et le diamètre des trous (Di) d'une rangée de trous, située à une distance $(r_i)$ de l'axe d'oscillation de la plaque, sont choisis suivant la relation:

$$D_i^2 \cdot z = \frac{4 x_i \cdot l}{\pi} - \frac{G_i^* \cdot L \cdot s \cdot T^3 (r_i^2 \cdot \tan\frac{\alpha}{2} - \frac{1}{2} b_o r_o)}{\pi^2 \cdot f \cdot r_i^3}$$

avec:

FIG.1

FIG.2

FIG. 3